Europäisches Patentamt

European Patent Office

Office européen des brevets

(19)

(11) Numéro de publication: **0 208 638**
**A1**

## (12) DEMANDE DE BREVET EUROPEEN

(21) Numéro de dépôt: **86430022.3**

(22) Date de dépôt: **19.06.86**

(51) Int. Cl.⁴: **A46B 13/02**

(30) Priorité: **21.06.85 FR 8509609**

(43) Date de publication de la demande:
**14.01.87 Bulletin 87/03**

(84) Etats contractants désignés:
**AT BE CH DE GB IT LI LU NL SE**

(71) Demandeur: **Lugol, Pierre**
**58 Bd. de Cimiez**
**F-06000 Nice(FR)**

(72) Inventeur: **Lugol, Pierre**
**58 Bd. de Cimiez**
**F-06000 Nice(FR)**

(74) Mandataire: **Hautier, Jean-Louis**
**OFFICE MEDITERRANEEN DE BREVETS**
**D'INVENTION 24 rue Masséna**
**F-06000 Nice(FR)**

(54) **Brosse à dents électrique rotative.**

(57) L'invention a pour objet une brosse à dents électrique.

Elle comporte, entre la vis sans fin (8) et le pignon (11) solidaire de la partie brossante (12), un pignon intermédiaire (10). Le pignon intermédiaire - (10) peut, par sa disposition, permettre de faire varier d'une part, l'angle (A), formé par l'axe passant par les centres d'au moins deux pignons et par la médiatrice (25) issue de la vis sans fin (8) et d'autre part, la profondeur (B) entre l'axe du manche (1) de la brosse à dents électrique et l'axe de la partie brossante (12).

FIG-1

EP 0 208 638 A1

**"Brosse à dents électrique rotative dont l'axe de la partie comportant des poils est entraîné par au moins un pignon intermédiaire qui engrène sur une vis sans fin montée sur l'arbre de transmission"**

L'invention a pour objet une brosse à dents électrique dont l'axe de la partie comportant des poils est entraînée par au moins un pignon intermédiaire qui engrène sur une vis sans fin montée sur l'arbre de transmission. L'état de la technique peut être défini par les brevets : U.S-A-1.127.566, U.S-A-2.655.676, U.S-A-2.749.567, FR-A-2.216.949, FR-A-2.377.173.

Ces différents brevets décrivent des brosses cylindriques qui sont montées directement engrenées sur un arbre moteur. Le mouvement est transmis par l'intermédiaire d'une tige motrice, suivant un moyen connu de transformation de mouvement : engrenage, vis hélicoïdale entraînant une roue dentée montée sur l'arbre creux, ou cônes de friction. Brevet FR-A-2.377.173. Dans ce brevet, de manière à obtenir un angle, entre l'axe moteur et l'axe de la brosse, l'extrémité de l'axe moteur est solidaire d'un pignon conique qui engrène avec un autre pignon conique solidaire de la brosse. L'axe de la brosse forme un angle droit avec l'axe de l'arbre.

Ainsi, soit l'axe de la brosse est dans le prolongement du manche de la brosse, soit l'axe de la brosse rotative est perpendiculaire à l'axe du manche de ladite brosse. Ces deux positions de la brosse rotative par rapport au manche sont absolument inefficaces pour brosser les dents. La partie brossante comporte un pignon qui engrène directement sur la vis sans fin. Il n'y a donc pas de décrochement entre la partie brossante et l'axe du manche de la brosse à dents électrique. Seul ce décrochement permet d'avoir en bouche une brosse à dents efficace.

C'est pourquoi, de manière à pouvoir obtenir un angle adéquat entre l'axe de la partie brossante rotative et le manche pour le brossage des dents, de nombreux brevets décrivent l'utilisation de câbles de transmission, voir notamment la demande de brevet LUGOL FR-A-84 09626 déposée le 18 Mai 1984.

Les câbles rotatifs présentent de nombreux inconvénients. Ils absorbent beaucoup d'énergie donc, si la brosse est alimentée par des piles, celles-ci devront avoir une grande capacité. Les câbles se détériorent rapidement. Enfin, les câbles nécessitent l'emploi de pignons volumineux.

Ainsi, tous les brevets cités ne permettent pas l'utilisation en bouche d'une brosse électrique rotative comportant une profondeur de décrochement adéquat entre la partie brossante et l'axe du manche de la brosse à dents électrique.

Un brevet U.S A.2.655.674 GROVER décrit un pignon intermédiaire qui engrène sur une vis sans fin; ce pignon actionne directement une roue dentée montée sur l'axe de la partie brossante.

Mais il n'y a pas de paliers au niveau du pignon d'entrainement de l'axe de la brosse. Il est donc nécessaire que l'axe de la brosse soit plus rigide et soit d'un diamètre plus grand.

Si le volume de l'axe de la partie brossante augmente, le volume de la partie empoilée doit diminuer pour obtenir un appareil qui puisse être utilisé en bouche. Enfin sans paliers centraux pour soutenir le pignon central, le pignon d'entrainement doit être surdimentionné (ce qui est dangereux pour le patient) pour absorber et rattraper le jeu de l'axe de la partie brossante qui n'est maintenue qu'à ses extrémités.

L'invention tend à résoudre tous ces inconvénients.

A cet effet, la brosse à dents rotative, composée d'une vis sans fin reliée à l'axe de rotation du moteur et d'un pignon solidaire de la partie brossante ou compartant des poils, est caractérisée par le fait, qu'entre la vis sans fin et le pignon solidaire de la partie brossante, sont disposés un ou plusieurs pignons intermédiaires.

Le ou les pignons intermédiaires peuvent, par leur disposition respective, permettre de faire varier d'une part, l'angle formé par l'axe passant par les centres d'au moins deux pignons et par la médiatrice issue de la vis sans fin et d'autre part, la profondeur entre l'axe du manche de la brosse à dents électrique et l'axe de la partie brossante.

Le ou les pignons intermédiaires sont maintenus par des paliers issus du capot.

Selon un mode de réalisation, le pignon d'entraînement de la partie brossante est également maintenu, au niveau de la partie médiane, par des paliers, disposés dans le prolongement des paliers du pignon intermédiaire issus du capot. L'axe de la partie brossante peut être monté avec un certain jeu, sur les paliers, de manière à ce que l'axe de la brosse, ou partie brossante, soit légèrement pivotant au niveau desdits paliers. Un moyen, faisant office d'arceau de protection, recouvre partiellement le pignon de la partie brossante de manière à protéger les dents et les gencives contre les chocs du pignon.

Un embout cylindrique protège l'arbre moteur issu du manche de la brosse et la vis sans fin. Des joints toriques sont disposés entre l'extrémité de l'embout cylindrique et le manche, et l'extrémité de l'embout cylindrique et la vis sans fin.

Un autre embout d'habillage peut venir coiffer cet ensemble mécanique. Cet embout d'habillage vient, par une extrémité, s'emboîter sur le manche et par son autre extrémité se terminer par une large ouverture qui laisse sortir une partie de la partie brossante et par un renflement qui fait office de carter.

Selon un autre mode de réalisation, la partie brossante n'est plus maintenue dans sa partie médiane par les paliers du capot, mais par les extrémités de son axe, qui reposent dans des logements disposés au niveau de l'extrémité de l'embout d'habillage qui comporte une large ouverture et un renflement qui fait office de carter.

La partie brossante comporte une ou plusieurs rangées de poils durs alternées avec une ou plusieurs rangées de poils souples.

Ladite brosse à dents peut être couplée avec un hydropluseur, l'arrivée du jet de l'hydropulseur pouvant se situer au milieu de la partie brossante. Le jet peut être orientable.

Un embout, spécial parodontologie, peut venir s'adapter sur le moteur et permettre d'entraîner mécaniquement des brosses intermédiaires. Enfin, un bouton permet d'inverser le sens de la rotation de la brosse qui peut ainsi tourner dans les deux sens.

Les dessins ci-joints donnés à titre d'exemples indicatifs et non limitatifs permettront de comprendre aisément l'invention. Ils représentent un mode de réalisation préféré selon l'invention.

La figure 1 est une vue en coupe selon l'axe longitudinal de la partie mécanique de la brosse à dents électrique rotative, sans son embout d'habillage.

La figure 2 est une vue en coupe selon l'axe C-C représenté à la figure 1 mettant en évidence le capot et ses paliers pour le pignon intermédiaire et le pignon d'entraînement de la partie brossante.

La figure 3 est une vue en coupe de l'embout d'habillage de la brosse à dents qui vient s'emmancher sur la partie extérieure du manche.

Selon un autre mode de réalisation, cet embout permet, au niveau de son ouverture, de maintenir la partie brossante par les extrémités de son axe qui viennent dans des logements disposés à cet effet au niveau de ladite ouverture qui fait également office de carter.

La figure 4 est une vue en coupe selon l'axe B-B représenté à la figure 3, de l'extrémité de l'embout d'habillage qui se termine par une large ouverture et par un renflement qui fait office de carter.

La figure 5 est une vue en plan, vu de dessus, de la brosse représentée à la figure 3.

La figure 6 est une vue en plan de la partie brossante selon le second mode de réalisation où la partie brossante est maintenue par les extrémités de son axe.

La brosse à dents électrique rotative comporte un manche 1 qui sert de boîtier 2 pour les piles, le moteur et le connecteur pour la recharge électrique (non représentées sur les figures). Un bouton à plusieurs positions, non représenté, permet de commander l'action ou l'arrêt du moteur. Un autre bouton permet, par un variateur de vitesse, de régler la vitesse de rotation de la brosse qui soit la plus efficace. Enfin, un autre bouton, non représenté, permet d'inverser le sens de la rotation de la partie brossante.

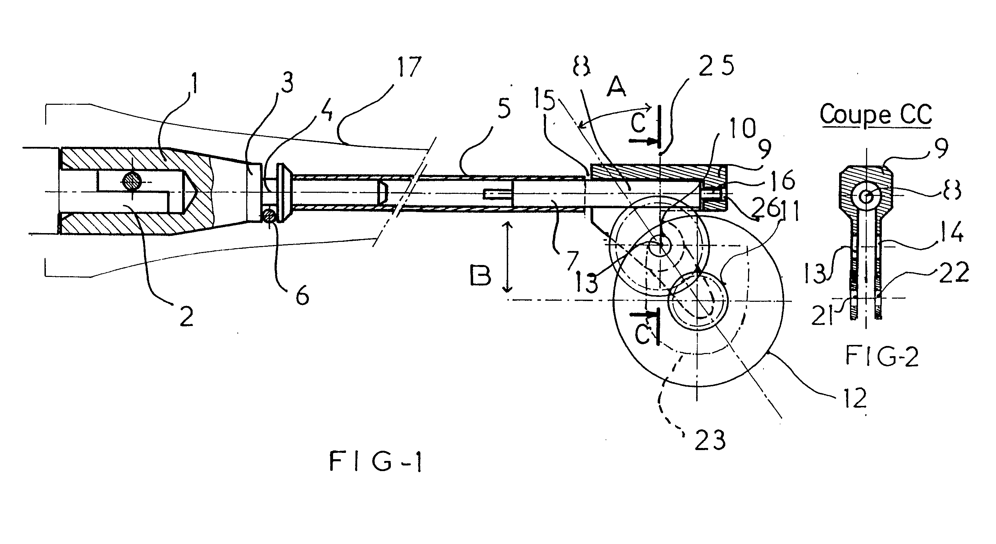

La partie mécanique de la brosse à dents électrique est représentée à la figure 1.

L'extrémité antérieure 3, du manche 1 laisse sortir l'arbre du moteur 4 qui vient dans un embout cylindrique 5. Un joint torique 6 assure l'étanchéité entre l'extrémité 3 du manche 1 et l'entrée de l'embout 5. L'arbre du moteur 4 peut être solidaire d'une tige motrice 7 qui se termine par une vis sans fin 8. La vis sans fin 8 sort de l'embout 5 et entre dans une pièce qui fait office de capot 9. L'étanchéité est assurée par un joint torique 15, disposé entre l'embout 5, le capot 9 et la tige motrice 7.

La brosse à dents rotative composée d'une vis sans fin 8 reliée à l'axe de rotation du moteur et d'un pignon 11 solidaire de la partie brossante ou comportant des poils, est caractérisée par le fait, qu'entre la vis sans fin 8 et le pignon 11, solidaire de la partie brossante 12, sont disposés un ou plusieurs pignons intermédiaires 16.

Le pignon intermédiaire 10 peut, par sa disposition, permettre de faire varier d'une part, l'angle A formé par l'axe passant par les centres d'au moins deux pignons 10, et 11 et par la médiatrice 25 issue de la vis sans fin 8 et d'autre part, la profondeur B entre l'axe du manche 1 de la brosse à dents électrique et l'axe de la partie brossante 12.

Sur la vis sans fin 8, vient engrener directement par un pignon intermédiaire 10 qui lui-même engrène avec un autre pignon 11 solidaire de la partie brossante ou comportant des poils 12.

Le joint torique 15 est particulièrement utile dans la mesure où il empêche la vis sans fin 8 en rotation, d'aspirer de la salive, du dentifrice, qui se trouveraient après dans l'embout 5, puis dans le manche 1. Il en est de même de l'utilité du joint torique 6 qui assure l'étanchéité avec l'extrémité 3 du manche.

La vis sans fin 8 repose, par son extrémité en forme de têton 16, dans un logement 26 prévu à cet effet dans le corps du capot 9.

Un arceau 23, représenté en pointillé sur la figure 1, protège les dents et les gencives contre toutes blessures provenant du pignon d'entrainement 11, de la partie brossante ou du pignon intermédiaire 10.

Selon le mode de réalisation représenté dans la figure 1, le pignon intermédiaire 10 est maintenu par son axe dans les paliers 13, 14 issus du capot 9. Dans ce mode de réalisation, la partie brossante 12 peut être maintenue en place au niveau de son axe, dans sa partie médiane, par des paliers 21, 22 qui se trouvent dans le prolongement des autres paliers 13, 14 issus du capot 9.

Les orifices des paliers 21, 22 peuvent être un peu large de manière à ce qu'il existe un certain jeu au niveau de la partie médiane de l'axe de la partie brossante 12. Ce jeu permet un pivotement de la partie brossante 12, qui peut ainsi mieux s'adapter aux parois à brosser.

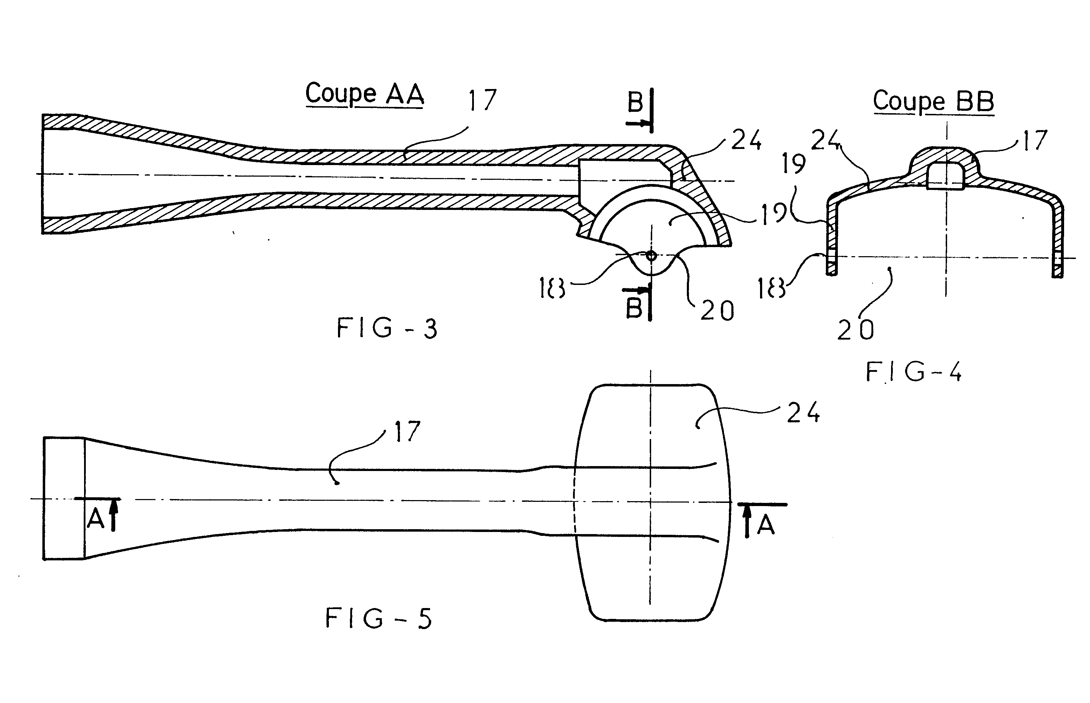

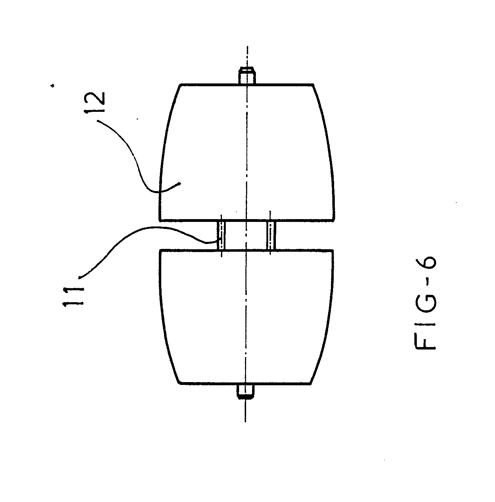

Selon un autre mode de réalisation représenté dans les figures 3, 4, 5, 6, la partie brossante 12 n'est plus maintenue dans sa partie médiane par les paliers du capot 9, mais aux extrémités de son axe qui viennent se loger dans des logements 18, prévus dans les flasques 19, de la partie renflée, qui fait office de carter 24 formé par l'extrémité de l'embout d'habillage 17 qui se termine par une large ouverture 20.

La partie brossante comporte une ou plusieurs rangées de poils durs, alternées avec une ou plusieurs rangées de poils souples.

Ladite brosse à dents peut être couplée avec un hydropulseur, l'arrivée du jet de l'hydropulseur pouvant se situer au milieu de la partie brossante 12 ; le jet peut être orientable.

Un embout, spécial parodontologie, peut venir s'adapter sur le moteur et permet d'entrainer mécaniquement des brosses intermédiaires.

**Revendications**

1. Brosse à dents électrique rotative dont la rotation est assurée par une vis sans fin (8) actionnée par un moteur et un pignon (11) solidaire de la partie brossante (12), un pignon intermédiaire (10) est disposé entre la vis sans fin et le pignon - (11) solidaire de la partie brossante caractérisée par le fait

que l'axe du pignon d'entrainement (11) de la partie brossante (12) est maintenu par des paliers - (21,22) qui se trouvent dans le prolongement de la pièce (9) d'où sont issus les paliers (13,14) qui eux servent au maintien du pignon intermédiaire (10).

2. Brosse à dents électrique rotative selon la revendication 1 caractérisée par le fait

que les paliers (21,22) du pignon d'entrainement - (11) de la partie brossante (12) sont dans le prolongement des paliers (13,14) qui eux servent au maintien du pignon intermédiaire (10).

3. Brosse à dents électrique rotative selon l'une quelconque des revendications 1 ou 2 caractérisée par le fait

que les paliers (13,14) du pignon intermédiaire et les paliers (21,22) de l'axe du pignon d'entrainement (11) de la partie brossante (12) sont disposés au niveau de la partie médiane de la partie brossante (12).

4. Brosse à dents électrique rotative selon la revendication 1 caractérisée par le fait

qu'un moyen de protection (23) recouvre partiellement ou totalement le pignon d'entrainement - (11) de la partie brossante (12) de manière à protéger les dents et les gencives contre les chocs des dents dudit pignon (11).

5. Brosse à dents électrique rotative selon l'une quelconque des revendications 1 ou 3 caractérisée par le fait

que le moyen de protection (23) est un arceau de protection.

6. Brosse à dents électrique rotative selon l'une quelconque des revendications 1 ou 2 caractérisée par le fait

que l'axe de la partie brossante (12) peut être monté avec un certain jeu sur les paliers (21, 22), de manière à ce que l'axe de la partie brossante - (12), soit légèrement pivotant au niveau desdits paliers (21, 22).

7. Brosse à dents électrique rotative selon la revendication 1 caractérisée par le fait

que ladite brosse à dents rotative peut être utilisée en combinaison avec un hydropulseur ; l'arrivée du jet hydropulseur pouvant se situer au milieu de la partie brossante rotative (12) ; le jet peut être orientable.

8. Brosse à dents électrique rotative selon la revendication 1 caractérisée par le fait

qu'un joint torique disposé au niveau de l'embout - (5) et de la vis sans fin (8) pour assurer l'étanchéité dans l'embout (5) et l'extrémité (3) du manche (1).

9. Brosse à dents électrique rotative selon la revendication1 caractérisée par le fait qu'un joint torique (6) assure l'étanchéité entre l'embout (5) et l'extrémité (3) du manche (1).

10. Brosse à dents électrique rotative selon la revendication 1 caractérisée par le fait que la vis sans fin (8) repose, par son extrémité, en forme de téton (16), dans un logement (26) prévu, à cet effet, dans le corps du capot (9).

Coupe CC

FIG-2

FIG-1

0 208 638

Coupe AA

FIG - 3

Coupe BB

FIG - 4

FIG - 5

0 208 638

FIG-6

0 208 638

## DOCUMENTS CONSIDERES COMME PERTINENTS

| Catégorie | Citation du document avec indication. en cas de besoin. des parties pertinentes | Revendication concernee | CLASSEMENT DE LA DEMANDE .int Cl 4. |
|---|---|---|---|
| D,A | US-A-2 655 674 (GROVER)<br>* Colonne 3, ligne 35 - colonne 4, ligne 39; colonne 5, lignes 64-73; colonne 6, lignes 31-66; figures 1-4,7,9-11 * | 1-3,10 | A 46 B 13/02 |
| | --- | | |
| A | FR-A- 672 409 (TITT)<br>* Page 1, ligne 52 - page 2, ligne 38; figures 1-6 * | 1-3,10 | |
| | --- | | |
| D,A | FR-A-2 216 949 (BARTHOD) | | |
| | --- | | |
| D,A | US-A-1 927 566 (HAWK) | | |
| | --- | | |
| A | DE-C- 634 607 (SCHMOLZ)<br>* Page 2, lignes 12-65; figures * | 6 | |
| | --- | | |
| A | FR-A-2 523 825 (GRECK) | | |
| | --- | | |
| A | US-A-3 621 505 (VOCKER et al.) | | |
| | --- | | |
| A | FR-A-2 515 505 (MATSUSHITA)<br><br>* Page 3, lignes 32-37; page 10, lignes 13-16; revendication 1; figures 1,2,5,11 * | | |
| | ----- | | |

DOMAINES TECHNIQUES RECHERCHES (Int. Cl.4)

A 46 B

Le présent rapport de recherche a été établi pour toutes les revendications

| Lieu de la recherche<br>LA HAYE | Date d'achèvement de la recherche<br>17-09-1986 | Examinateur<br>BOURSEAU A.M. |
|---|---|---|